(19) **Europäisches Patentamt**
**European Patent Office**
**Office européen des brevets**

(11) **EP 2 694 287 B1**

(12) **FASCICULE DE BREVET EUROPEEN**

(45) Date de publication et mention de la délivrance du brevet:
**05.08.2015   Bulletin 2015/32**

(21) Numéro de dépôt: **12713137.3**

(22) Date de dépôt: **04.04.2012**

(51) Int Cl.:
***B32B 17/10*** *(2006.01)*

(86) Numéro de dépôt international:
**PCT/EP2012/056116**

(87) Numéro de publication internationale:
**WO 2012/136681 (11.10.2012 Gazette 2012/41)**

(54) **VITRAGE RESISTANT AU FEU**

FEUERFESTE VERGLASUNG

FIRE RESISTANT GLAZING UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.04.2011   BE 201100208**

(43) Date de publication de la demande:
**12.02.2014   Bulletin 2014/07**

(73) Titulaire: **AGC Glass Europe**
**1348 Louvain-la-Neuve (BE)**

(72) Inventeurs:
• **GOELFF, Pierre**
  **B-6040 Jumet (BE)**
• **LESCOT, Thomas**
  **B-6040 Jumet (BE)**

(74) Mandataire: **Le Vaguerèse, Sylvain Jacques**
**AGC Glass Europe**
**Technovation Centre**
**IP Department**
**Rue Louis Blériot, 12**
**6041 Gosselies (BE)**

(56) Documents cités:
WO-A1-01/70495         WO-A1-2007/118886
WO-A1-2007/118887      WO-A1-2008/145611
DE-A1-102004 031 785

**Description**

La présente invention concerne des vitrages transparents résistant au feu, et comprenant au moins une couche de matériau intumescent constitué de silicate alcalin.

L'utilisation des silicates alcalins répond à diverses nécessités. Il doit s'agir de matériaux qui offrent une bonne protection lorsque les vitrages sont exposés au feu. Ceci est obtenu par l'expansion de ces silicates sous forme d'une mousse réfractaire qui protège contre la propagation à la fois des flammes et du rayonnement. Les matériaux en question doivent aussi présenter une grande transparence avant toute exposition au feu. Ils doivent aussi ne présenter aucun défaut tel que voile ou bulle. Enfin les vitrages doivent encore offrir une résistance mécanique suffisante tenant compte de l'utilisation envisagée. Les vitrages doivent ainsi souvent présenter une résistance adéquate à ce qui est nommé «choc mou».

Les produits intumescents à base de silicates alcalins présentent des qualités réfractaires d'autant plus élevées que le rapport molaire $SiO_2/M_2O$ est lui-même plus élevé, M étant un métal alcalin. Mais il est connu que les produits les plus réfractaires sont aussi très peu plastiques. Leur résistance est souvent insuffisante pour satisfaire aux normes correspondant aux utilisations dans lesquelles ces produits sont exposés à des chocs.

Pour tenter de concilier les deux aspects de résistance aux chocs et l'importance du caractère réfractaire, les solutions antérieures se sont portées vers l'association de matériaux divers. Une manière est par exemple de faire en sorte d'utiliser des feuilles de verre armées de treillis métalliques. Cette solution présente l'inconvénient évident d'altérer les qualités optiques des vitrages considérés. Une autre solution consiste à constituer des ensembles comprenant en plus des matériaux intumescents des feuilles traditionnellement utilisées dans les vitrages feuilletés de sécurité. Le plus usuel dans ce sens est l'utilisation de feuilles polymères transparentes qui présentent à la fois une bonne adhérence aux feuilles de verre et une bonne plasticité. Des feuilles typiques sont par exemple celles de polyvinylbutyral (PVB). D'autres matériaux sont aussi traditionnellement utilisés tels que l'EVA (ethylène-vinyl-acetate) ou des polymères équivalents.

Si les feuilles de polymères répondent bien par leur plasticité aux exigences en matière de résistance aux chocs, elles introduisent des éléments qui sont sensibles au feu. Elles se carbonisent plus ou moins rapidement en dégageant des fumées indésirables.

Les feuilles polymères choisies adhèrent bien au verre, mais insuffisamment aux couches intumescentes. Elles sont donc introduites entre des feuilles de verre qui ajoutent à la complexité de la structure du vitrage.

L'invention se propose de fournir des vitrages qui répondent simultanément aux exigences de résistance au choc et de fort caractère réfractaire, sans pour autant nécessiter la présence d'éléments entraînant les inconvénients rappelés ci-dessus.

L'invention répond à ces diverses exigences par la mise en oeuvre de virages tels que définis dans la revendication 1.

Les inventeurs ont montré en particulier qu'il était possible de définir une composition de matériau intumescent bien spécifique qui conduise simultanément à une résistance au feu satisfaisante, offrant les caractéristiques requises en matière de résistance mécanique au choc, et conservant une bonne transparence. La nature et la préparation des compositions utilisées sont autant d'éléments qui doivent être très précisément suivis pour parvenir au résultat recherché.

En premier les compositions des couches intumescentes doivent être suffisamment réfractaires pour offrir une bonne résistance au feu. Pour parvenir à ce résultat le choix de silicates alcalins est porté sur les silicates de sodium et dé potassium et de préférence sur des mélanges de ces deux alcalins.

La nature du silicate a une influence sur les propriétés des couches et sur les conditions de leur production. Les gels aqueux des silicates de potassium, toutes caractéristiques égales par ailleurs, s'expansent ,en réaction au feu de manière plus importante que ceux de sodium. Le volume de la mousse formée améliore la résistance au feu. Les gels aqueux des silicates de sodium à l'inverse sont moins facilement expansés mais surtout moins sensibles au fluage sur site.

Le mélange de silicates de sodium et de potassium est de nature à combiner de façon positive les propriétés des deux constituants.

Selon l'invention le rapport atomique Na/K dans les mélanges de silicates est de 1/3<Na/K<6/1. De manière préférée ce rapport est de 1/2<Na/K<5/1.

Pour garantir à la fois la résistance au feu, les propriétés de résistance au choc et la résistance au fluage sur site, il est nécessaire de choisir un rapport molaire $SiO_2/M_2O$ très précis.

Selon l'invention ce rapport doit être supérieur à 3,0 pour maintenir une résistance au feu suffisante.

Les qualités plastiques des vitrages sont assurées notamment en maintenant le rapport molaire pas trop élevé. Le rapport molaire $SiO_2/(Na_2O+K_2O)$ n'est pas supérieur à 3,2.

La plasticité est encore question des teneurs en produits hydroxylés, eau et glycérine. Le choix des teneurs de ces constituants n'est pas seulement dicté par les qualités évoquées précédemment. La teneur en eau fait intervenir de façon significative les conditions de préparation de ces couches intumescentes. Il s'agit des matières premières susceptibles d'être utilisées. Les silicates alcalins sont nécessairement sous forme hydratée, et comportent une teneur en eau initiale qui est supérieure à celles que l'on trouve dans la couche intumescente. Même si le choix des matières premières dont il est question ci-après permet de limiter la teneur en eau, celle-ci est supérieure à la teneur convenant pour les couches intumescentes selon l'invention.

Par ailleurs même si l'eau et la glycérine contribuent à la plasticité des couches, ces deux constituants ne sont que très partiellement interchangeables. En effet, la glycérine peut contribuer au feu en brûlant ou en pyrolysant tandis que l'eau peut contrecarrer le développement du feu en s'évaporant de façon endothermique.

La teneur en eau des couches intumescentes des vitrages selon l'invention est comprise entre 23% et 27% en poids. De préférence elle est inférieure ou égale à 25%.

La teneur en glycérine des couches intumescentes selon l'invention est comprise entre 20% et 25% en poids.

La glycérine participe à la plasticité de la couche. La teneur relativement élevée selon l'invention améliore sensiblement les caractéristiques mécaniques de résistance au choc. La présence de cette forte concentration en glycérine améliore aussi la résistance aux basses températures. Les produits anti-feu comportant ces matériaux intumescents lorsqu'ils sont exposés aux conditions atmosphériques doivent pouvoir supporter sans dégradation les températures les plus basses. La glycérine aux concentrations utilisées selon l'invention permet d'atteindre des températures inférieures à -40°C sans effet dommageable sur les qualités du vitrage.

Le choix de la concentration en glycérine tient compte d'ordinaire du comportement de ce produit lors de l'épreuve du feu. En règle générale on s'efforce de limiter la teneur en produits organiques qui se décomposent et brûlent à haute température. Selon l'invention la forte teneur en glycérine est l'objet d'un compromis entre la résistance au feu et la résistance mécanique. Aux teneurs choisies il est important que pour les vitrages relativement légers, les performances les plus recherchées soient effectivement atteintes comme indiqué plus loin.

Globalement les teneurs combinées en eau et glycérine sont avantageusement de 43 à 48% en poids de la couche intumescente.

En dehors des silicates alcalins hydratés et de la glycérine, les couches intumescentes peuvent encore contenir des additifs divers traditionnellement utilisés dans ces compositions. Les additifs en question ont pour but notamment de stabiliser les couches en question de telle sorte que leurs qualités optiques soient maintenues dans le temps. Les produits additionnels peuvent aussi contribuer à la facilité de préparation en jouant par exemple sur la miscibilité des constituants ou à l'élimination des bulles incluses. Dans ce sens des produits tensio-actifs peuvent présenter un avantage.

Dans tous les cas les produits additionnels sont en proportion très limitée. Leur teneur ne dépasse pas 5% en poids de la couche, et le plus souvent pas 3%.

Des composés aminés figurent parmi les additifs les plus usuels, notamment le tétraméthyl hydroxy ammonium (TMAH). Ce constituant est de préférence en proportion ne dépassant pas 2% en poids de la couche. Le TMAH favorise le maintien de la qualité optique dans le temps.

De manière particulièrement surprenante les inventeurs ont constaté que les qualités requises des produits selon l'invention sont tributaires des matières utilisées pour la constitution des couches intumescentes. Ainsi traditionnellement la production de couches à base de silicates alcalins hydratés, fait appel à des produits industriels en solution plus ou moins concentrée. Les solutions en question, qui trouvent des applications dans des domaines techniques très divers, ont l'avantage d'être disponibles en grandes quantités à des conditions économiques avantageuses. Pour cette raison les silicates disponibles ont été systématiquement utilisés. Les inventeurs ont constaté néanmoins que dans les produits présentant la composition qui est l'objet de l'invention, l'utilisation des silicates en question conduisait à des produits dont les propriétés optiques les rendaient inutilisables pour les applications considérées selon l'invention. A l'expérience les couches intumescentes obtenues ne sont pas transparentes. Elles présentent très rapidement un aspect laiteux. La raison de cette particularité n'a pas été analysée. Elle est cependant récurrente, quelle que soit l'origine des silicates commerciaux utilisés.

Les inventeurs ont constaté, contrairement à ce que l'usage des solutions commerciales de silicates laissait supposer, qu'il est possible d'obtenir des produits non seulement offrant les propriétés mécaniques et de résistance au feu recherchées, mais encore pouvant garder leur transparence d'origine tout au long de leur utilisation, à condition de ne pas utiliser les silicates commerciaux. Pour la mise en oeuvre de l'invention il est nécessaire de procéder à la production des compositions de silicates alcalins par réaction de suspensions de silice colloïdale et d'hydroxydes alcalins.

Pour ces constituants de base il est avantageux d'utiliser des produits aussi concentrés que le permettent les produits en question. Les suspensions de silice colloïdale disponibles commercialement ont des teneurs pondérales en silice qui vont ordinairement jusqu'à 50% en poids, le reste étant de l'eau, ou de l'eau comprenant des additifs. Pour les hydroxydes alcalins il est possible d'utiliser des solutions concentrées, mais il est encore préférable pour minimiser la teneur en eau du produit de réaction avec la silice colloïdale, de choisir des pastilles solides lesquelles renferment une quantité d'eau encore plus réduite.

De manière décrite dans une demande antérieure WO 2008/145611, il est connu que les dimensions des particules de silice des solutions colloïdales ont une influence sur le comportement des compositions à partir desquelles sont produites les couches intumescentes.

De façon générale l'accroissement des dimensions des particules de silice, dans certaines limites, permet d'accroître le temps disponible («pot life») pour la mise en oeuvre des compositions de silicate après la mise en réaction de la silice et des hydroxydes alcalins.

Les mécanismes qui conduisent à ces propriétés ne sont pas entièrement élucidés. Ils mettent en oeuvre des phénomènes complexes associant les particules de silice au sein de la composition. La formation d'agrégats plus ou moins structurés, semble dépendre de l'environnement immédiat des particules susceptibles de se lier les unes aux autres. Le réseau constitué serait d'autant plus "serré", et donc la composition moins fluide, que les liaisons sont plus nombreuses. A quantité de silice constante, la surface disponible pour la formation de ces liaisons est d'autant plus grande que les particules sont plus petites. Autrement dit la formation du réseau de silicate alcalin est favorisé par la présence des petites particules.

Il va de soi que l'accroissement des dimensions des particules est limité. Au-delà d'une certaine dimension les compositions ne présentent plus les propriétés optiques requises, et en particulier la transparence. Des dimensions trop importantes conduisent à une diffusion de la lumière, ou selon les termes usuels, à la formation d'un voile ("haze").

En pratique les particules de silice utilisées pour la formation des compositions de silicates alcalins selon l'invention ont un diamètre moyen qui n'est pas inférieur à 40nm. Ces particules ont aussi des dimensions moyennes qui ne dépassent pas avantageusement 100nm. Le diamètre moyen particulièrement préféré se situe entre 50 et 70nm.

Les dimensions des particules d'une même suspension de silice sont ordinairement bien homogènes. Une part qui n'est pas inférieure à 80% en poids des particules se situe dans l'intervalle de ±10% du diamètre moyen.

Compte tenu de la faible teneur en eau des couches intumescentes des vitrages selon l'invention, partant des produits de réaction de suspensions de silice et d'hydroxydes alcalins, la production des couches requiert nécessairement l'élimination d'une certaine quantité d'eau. Les produits de réaction même en choisissant les conditions permettant de limiter la teneur en eau, conduisent cette teneur à des valeurs de l'ordre de 40 à 55% en poids. L'élimination d'une quantité significative d'eau peut être conduite de deux façons.

En premier l'élimination peut intervenir sur la composition elle-même qui est soumise à une déshydratation sous pression réduite et en élevant la température de manière modeste, pas plus de 80°C et de préférence pas plus de 60°C. La déshydratation ne requiert pas un vide très poussé. La pression réduite n'a pour but que d'accélérer l'opération. Pour cette raison la pression au dessus de la composition à déshydrater est avantageusement de 1 à 100hPa, et de préférence de 1 à 20hPa.

Compte tenu de la teneur en eau finale des couches intumescentes la déshydratation requise ne peut être utilisée seule. A ces teneurs la composition devient beaucoup trop visqueuse pour pouvoir être appliquée en couche relativement mince et uniforme sur les feuilles de verre. Il est alors nécessaire d'avoir recours à la seconde manière d'élimination de l'eau.

L'élimination d'eau peut être effectuée sur la couche elle-même après que la composition ait été coulée sur le support (une feuille de verre). Ce mode de séchage est néanmoins relativement lent et très contraignant dans sa conduite. Aussi, de préférence il est utilisé pour l'élimination d'eau après avoir procédé à une déshydratation du type indiqué ci-dessus.

En pratique la déshydratation est conduite aussi loin que l'accroissement de la viscosité permet l'application ultérieure de la composition sur la feuille de verre, et ceci en conservant un temps de mise en oeuvre qui ne soit pas inférieur à 15 minutes. Partant de la teneur en eau préalablement réduite le séchage achève la préparation de la couche intumescente. Compte tenu de la nature des compositions selon l'invention la viscosité limite pour ce qui concerne l'étape de déshydratation se situe aux alentours d'une teneur en eau de 30% en poids de la composition.

Les opérations indiquées précédemment, et le choix préféré indiqué, sont d'autant plus nécessaires qu'en présence d'une forte concentration en glycérine le séchage des couches à composition par ailleurs équivalente est plus lent.

Les vitrages selon l'invention comportant une couche intumescente telle que décrite précédemment conduisent à des produits qui cumulent transparence, résistance au feu et résistance au choc mou.

Il est particulièrement important que ces propriétés soient obtenues pour les vitrages anti-feu les plus usuels lesquels sont aussi les plus légers.

Ainsi les vitrages correspondant à la classification EW30 selon la norme EN-1364, vitrages dont la protection étanchéité et écran au rayonnement est assurée pendant un minimum de 30 minutes, peuvent être obtenus pour un ensemble comprenant deux feuilles de verre de 3mm d'épaisseur chacune, réunies par une couche intumescente répondant aux conditions énoncées précédemment, et d'épaisseur de 1,5 à 2,5mm. Un tel ensemble de surcroît répond aussi aux exigences de la norme EN-12600 pour ce qui concerne la propriété de résistance au choc désignée comme 2B2.

Les performances indiquées ci-dessus sont aussi dépendantes des dimensions des vitrages testés. Plus les dimensions sont grandes plus grande est la difficulté de parvenir à passer avec succès les tests en question. Dans le cas de l'invention les vitrages de dimensions égales ou supérieures à 1,5mx2m et même supérieures à 1,3mx2,9m répondent à ces conditions.

L'invention est décrite de manière détaillée dans les exemples suivants.

Une composition pour l'obtention de couches intumescente est préparée selon l'invention à partir d'une suspension de silice colloïdale et d'un mélange d'hydroxyde de sodium et de potassium.

La suspension de silice est commercialisée sous le nom de Klebosol 50R50. Il s'agit d'une suspension comportant 50% en poids de silice de diamètre moyen des particules de 50nm.

Une solution concentrée (teneur en eau de 50% en poids) d'hydroxyde est préparée dans laquelle le rapport atomique Na/K est établi à 2,8. Cette solution est ajoutée progressivement dans la suspension de silice.

La glycérine et le TMAH sont ajoutés au mélange précédent dans les proportions conduisant la composition après déshydratation et séchage aux teneurs pondérales respectives de 22,5 et environ 1%.

Dans un premier essai, le mélange est maintenu à 50°C jusqu'à stabilisation du mélange clarifié. Il est ensuite soumis à déshydratation sous pression réduite de 30hPa en chauffant le mélange dans un Bain-Marie à 60°C.

La composition déshydratée à une teneur en eau voisine de 30% en poids est appliquée sur une feuille de verre de 2,85mm d'épaisseur. La composition est appliquée à raison de 5,2 kg/m$^2$.

La feuille revêtue de la solution est soumise à un cycle de séchage complémentaire dans une enceinte parcourue par un courant d'air dont la température et l'hygrométrie sont régulée. Le séchage est poursuivi jusqu'à la formation de la couche séchée dont le taux $H_2O$ est de 25% en poids.

La feuille de verre revêtue de la couche intumescente séchée, de dimensions 1,2x2m est ensuite assemblée avec une deuxième feuille de même dimensions, par calandrage. L'ensemble est ensuite soumis aux essais de vieillissement accéléré et de résistance au feu dans des conditions normalisées.

Le vieillissement est conduit en soumettant le vitrage à une température de 80°C. On contrôle pendant cette période la qualité optique du vitrage. Celle-ci est considérée satisfaisante dans la mesure où le voile («haze») autrement dit la diffusion de la lumière à travers le vitrage reste inférieure à 3% de la lumière incidente.

Dans le cas du vitrage selon l'invention la qualité optique est maintenue bien au-delà de 21 jours qui est la durée correspondant à une vieillissement équivalent selon la norme à au moins 10 années d'utilisation dans des conditions ordinaires.

Le vitrage est aussi soumis à une épreuve au feu normalisée. Le temps de résistance EW est toujours supérieur à 30 minutes et s'établit en moyenne à 35 minutes, pour un ensemble de 4 essais successifs.

Le vitrage répond aussi aux critères mécaniques correspondant à la classification 2B2.

Dans un deuxième essai, le sol non déshydraté est coulé sur des feuilles de verre. Les couches sont séchées dans une chambre climatique régulée en température en humidité relative suivant un cycle qui permet d'abaisser la concentration en eau à 25%. Les vitrages fabriqués après calandrage et autoclavage ont subi les mêmes tests optiques, mécanique et de résistance au feu et ont obtenu des résultats sensiblement semblables aux vitrages du premier essai.

A titre comparatif des vitrages sont constitués de manière semblable au premier essai mais en n'introduisant dans la couche intumescente qu'une teneur en glycérine de 15 et 20% en poids respectivement. Dans les deux cas la qualité optique dans le vieillissement accéléré est satisfaisante. L'épreuve au feu normalisée conduit à des durées insuffisantes respectivement de 13 et 25 minutes.

Un essai comparatif est conduit également en partant d'un vitrage dont la couche intumescente est de composition identique à celle de l'exemple selon l'invention. Dans ce cas cependant le silicate utilisé est un silicate préparé par mélange de solutions commerciales. La teneur en eau de la couche est entièrement réglée par séchage sur la feuille de verre comme lors du deuxième essai.

Le vitrage de comparaison conduit en moins de 8 jours à 80°C à un voile laiteux, ce qui rend ce vitrage impropre à son utilisation.

## Revendications

**1.** Vitrage résistant au feu transparent comprenant deux feuilles de verre et entre ces feuilles un composé intumescent à base de silicate alcalin hydraté lequel présente un rapport molaire

$$3,2 \geq SiO_2/(Na_2O + K_2O) > 3,$$

dans lequel le rapport atomique Na/K est tel que

$$1/3 < Na/K < 6/1.$$

et comprend une teneur en eau comprise entre 23 et 27% en poids, une teneur pondérale en glycérine qui est comprise entre 20 et 25%, cette composition étant produite à partir de silice colloïdale et des hydroxydes alcalins correspondants, solution à laquelle est ajoutée la glycérine et éventuellement d'autres additifs ne représentant pas plus de 5% en poids de la couche.

**2.** Vitrage selon la revendication 1 dans lequel la couche intumescente présente une teneur pondérale combinée d'eau et de glycérine comprise entre 43 et 48%.

**3.** Vitrage selon l'une des revendications précédentes dans lequel la couche intumescente comprend encore comme additif du TMAH à une teneur pondérale qui ne dépasse pas 2% en poids de la couche.

**4.** Vitrage selon l'une des revendications précédentes comprenant deux feuilles de verre de 3mm d'épaisseur chacune et une épaisseur de couche intumescente de 1,5 à 2,5mm d'épaisseur de classe EW30 selon la norme EN-1364 pour des dimensions d'au moins 1,5m x 2m.

**5.** Procédé de production d'un vitrage selon l'une des revendications précédentes dans lequel la silice colloïdale utilisée dans la préparation de la couche intumescente est sous forme de solution les particules de silice présentant une dimension moyenne de 50 à 70nm.

**6.** Procédé de production d'un vitrage selon l'une des revendications 1 à 5 dans lequel la teneur en eau de la composition de la couche intumescente est amenée aux valeurs requises par déshydratation partielle et/ou séchage de la couche appliquée sur une feuille de verre entrant dans la composition du vitrage.

**7.** Procédé selon la revendication 6 dans lequel la déshydratation est faite sur la composition par évaporation sous pression réduite et à température de contact ne dépassant pas 80°C.

**8.** Procédé selon la revendication 6 dans lequel la composition avant déshydratation et/ou séchage présente une teneur en eau globale comprise entre 40 et 55% en poids de la composition.

**Patentansprüche**

**1.** Transparente Brandschutzverglasung, umfassend zwei Glasscheiben und dazwischen eine intumeszierende Verbindung auf Basis von hydratisiertem Alkalisilikat, die ein Molverhältnis von

$$3,2 \geq SiO_2/(Na_2O + K_2O) > 3$$

aufweist, wobei das Na/K-Atomverhältnis so beschaffen ist, dass

$$1/3 < Na/K < 6/1,$$

und mit einem Wassergehalt zwischen 23 und 27 Gew.-% und einem Gewichtsanteil an Glycerin, der zwischen 20 und 25% liegt, wobei diese Zusammensetzung aus kolloidalem Siliciumdioxid und entsprechenden Alkalihydroxiden hergestellt wird, wobei die Lösung mit dem Glycerin und gegebenenfalls anderen Additiven, die nicht mehr als 5 Gew.-% der Schicht ausmachen, versetzt wird.

**2.** Verglasung nach Anspruch 1, wobei die intumeszierende Schicht einen kombinierten Gewichtsanteil an Wasser und Glycerin zwischen 43 und 48% aufweist.

**3.** Verglasung nach einem der vorhergehenden Ansprüche, wobei die intumeszierende Schicht außerdem als Additiv TMAH in einem Gewichtsanteil von höchstens 2 Gew.-%, bezogen auf die Schicht, umfasst.

**4.** Verglasung nach einem der vorhergehenden Ansprüche, umfassend zwei Glasscheiben mit einer Dicke von je 3 mm und eine intumeszierende Schicht von 1,5 bis 2,5 mm Dicke der Klasse EW30 gemäß der Norm EN-1364 für Abmessungen von mindestens 1,5 m x 2 m.

**5.** Verfahren zur Herstellung einer Verglasung nach einem der vorhergehenden Ansprüche, bei dem das bei der Herstellung der intumeszierenden Schicht kolloidale Siliciumdioxid in Form von Siliciumdioxidteilchen mit einer mittleren Abmessung von 50 bis 70 nm vorliegt.

**6.** Verfahren zur Herstellung einer Verglasung nach einem der Ansprüche 1 bis 5, bei dem der Wassergehalt der Zusammensetzung der intumeszierenden Schicht durch teilweise Dehydratisierung und/oder Trocknung der auf eine in die Zusammensetzung der Verglasung Eingang findende Glasscheibe aufgebrachten Schicht auf die geforderten Werte gebracht wird.

**7.** Verfahren nach Anspruch 6, bei dem die Dehydratisierung der Zusammensetzung durch Abdampfen unter vermindertem Druck und bei einer Kontakttemperatur von höchstens 80° C durchgeführt wird.

**8.** Verfahren nach Anspruch 6, bei dem die Zusammensetzung vor der Dehydratisierung und/oder Trocknung einen Gesamtwassergehalt zwischen 40 und 55 Gew.-%, bezogen auf die Zusammensetzung, aufweist.

**Claims**

**1.** Transparent, fire-resistant glazing unit comprising two sheets of glass and between these sheets an intumescent compound based on hydrated alkali metal silicate, having a molar ratio

$$3.2 \geq SiO_2/(Na_2O + K_2O) > 3,$$

in which the atomic Na/K ratio is such that

$$1/3 < Na/K < 6/1,$$

and which comprises an amount of water of between 23% and 27% by weight, an amount by weight of glycerol of between 20% and 25%, this composition being produced from colloidal silica and corresponding alkali metal hydroxides, a solution to which the glycerol and optionally other additives are added not representing more than 5% by weight of the layer.

2. Glazing unit according to Claim 1, in which the intumescent layer has a combined amount by weight of water and of glycerol of between 43% and 48%.

3. Glazing unit according to either of the preceding claims, in which the intumescent layer further comprises as additive TMAH in an amount by weight which does not exceed 2% by weight of the layer.

4. Glazing unit according to any of the preceding claims, comprising two sheets of glass each 3 mm thick and an intumescent layer from 1.5 to 2.5 mm thick, of class EW30 according to the EN 1364 standard for dimensions of at least 1.5 m × 2 m.

5. Process for producing a glazing unit according to any of the preceding claims, in which the colloidal silica used in the preparation of the intumescent layer is in the form of a solution, the particles of silica having an average size of 50 to 70 nm.

6. Process for producing a glazing unit according to any of Claims 1 to 5, in which the amount of water in the composition of the intumescent layer is brought to the required levels by partial dehydration and/or drying of the layer applied to a sheet of glass forming part of the composition of the glazing unit.

7. Process according to Claim 6, in which the dehydration is carried out on the composition by evaporation under reduced pressure and at a contact temperature not exceeding 80°C.

8. Process according to Claim 6, in which the composition before dehydration and/or drying has an overall amount of water of between 40% and 55% by weight of the composition.

**RÉFÉRENCES CITÉES DANS LA DESCRIPTION**

**Documents brevets cités dans la description**

- WO 2008145611 A